# EUROPEAN PATENT SPECIFICATION

(11) **EP 3 021 162 B1**
(45) Date of publication and mention of the grant of the patent: **02.03.2022**
(21) Application number: 15150652.4
(22) Date of filing: 09.01.2015
(51) Int. Cl.: G02F 1/13357

(54) **Projection display apparatus**
Projektionsanzeigevorrichtung
Appareil d'affichage de projection

(30) Priority: 11.11.2014 US 201414537982
(43) Date of publication of application: 18.05.2016
(73) Proprietor: Himax Display, Inc., Tainan City 74148 (TW)
(72) Inventor: Chen, Kuan-Yu, 74148 Tainan City (TW); Li, Yuet Wing, 74148 Tainan City (TW)
(74) Representative: Epping - Hermann - Fischer

(56) References cited:
- EP-A1- 1 134 488
- EP-A1- 2 770 349
- EP-A2- 1 241 514
- WO-A1-01/84228
- WO-A1-95/17699
- CN-A- 102 411 206
- JP-A- 2001 215 509
- JP-A- 2001 215 509
- JP-A- 2003 307 728
- US-A1- 2004 125 275
- US-A1- 2011 244 187

## Description

### BACKGROUND

### 1. Field of the Invention

The present invention relates to projection display apparatuses.

### 2. Description of the Related Art

Image or video projectors such as the ones used in head-mounted systems generally include a liquid crystal panel, and an illuminating device that irradiates light onto the liquid crystal panel. The liquid crystal panel can modulate the incident light to produce an image, which is then transferred through an projection optics for display to the user. However, some of the projectors currently available on the market may exhibit ghost images, which alters the display quality.

In documents document JP 200115509, JP 2003307728, and WO0184228 a liquid crystal device is described which comprises a thin and light-weight structure and enables a beneficial efficiency of light emitting. Amongst others, the liquid crystal device comprises a transparent plate that is disposed on an observer side adjacent to an electrode and can act to guide light. Document US 2011024418 discloses techniques for manufacturing optical films having internal cavity optical patterns which include small cavities spread across a surface of a thin transparent material. The thin material may then be laminated to a second material to join the surface having the cavities with the second material and thereby enclose the cavities within the resulting combination. The document CN102411206 discloses a front lit modulator coupled to a beam splitter cube for illumination and image light split.

Therefore, there is a need for an improved projection display apparatus that can address at least the foregoing issues.

### SUMMARY

The present application describes a projection display apparatus according to appended claim 1 that can have a reduced thickness, and offer improved image display. In one embodiment, the projection display apparatus includes a light source configured to emit a first light, a reflective light modulator configured to modulate the first light to form a second light conveying a rendered image, a polarizer and a light guide plate. The light guide plate has a light incidence surface through which the first light enters the light guide, a first outer surface through which a portion of the first light exits the light guide plate for traveling toward the light modulator, and a second outer surface opposite to the first outer surface through which a portion of the second light exits the light guide plate for traveling toward the polarizer. The light guide plate includes a plurality of optical elements, each of the optical elements has a reference axis that is orthogonal to the second outer surface, and a first and a second sidewall that extend at two sides of the reference axis, the first sidewall facing toward the light incidence surface, the second sidewall facing toward a side of the light guide plate opposite to that of the first sidewall, and a first angle defined between the first sidewall and the reference axis being smaller than a second angle defined between the second sidewall and the reference axis. The projection display apparatus further comprises a multilayer film coating comprised of dielectric or metal layers arranged on the first and second sidewalls, the multilayer film coating promoting polarization selection when optical reflection occurs on the first and second sidewalls for the first light traveling through the light guide plate, and transmission through the first and second sidewalls for the second light from the light modulator. Further, a focusing lens is arranged between the light modulator and the light guide plate, the focusing lens being positioned to focus on the light modulator.

### BRIEF DESCRIPTION OF THE DRAWINGS

FIG. 1 is a schematic view illustrating an embodiment of a projection display apparatus;
FIG. 2 is a schematic view illustrating the structure of a light guide plate used in the projection display apparatus;
FIG. 3 is a schematic view illustrating the propagation paths of different portions of an illuminating light through the light guide plate;
FIG. 4 is a schematic view illustrating a propagation path of an image light from a light modulator through the light guide plate;
FIG. 5A is a schematic view illustrating the structure of a comparative light guide plate;
FIG. 5B is a schematic view illustrating the structure of another comparative light guide plate;
FIG. 6 is a schematic view illustrating an embodiment of the light guide plate in which a plurality of grooves are distributed on an outer surface with a varying groove depth along a light propagation direction;
FIG. 7 is a schematic view illustrating another embodiment of the light guide plate in which the grooves are distributed with a varying period along the light propagation direction;
FIG. 8 is a schematic view illustrating an array layout in which the grooves are arranged according to a staggered distribution on an outer surface of the light guide plate;
FIG. 9 is a schematic view illustrating a comparative example not according to the invention in which a plurality optical elements are embedded in the thickness of the light guide plate; and
FIG. 10 is a schematic view illustrating another embodiment in which a plurality of protruding optical elements are provided on an outer surface of the light guide plate.

### DETAILED DESCRIPTION OF THE EMBODIMENTS

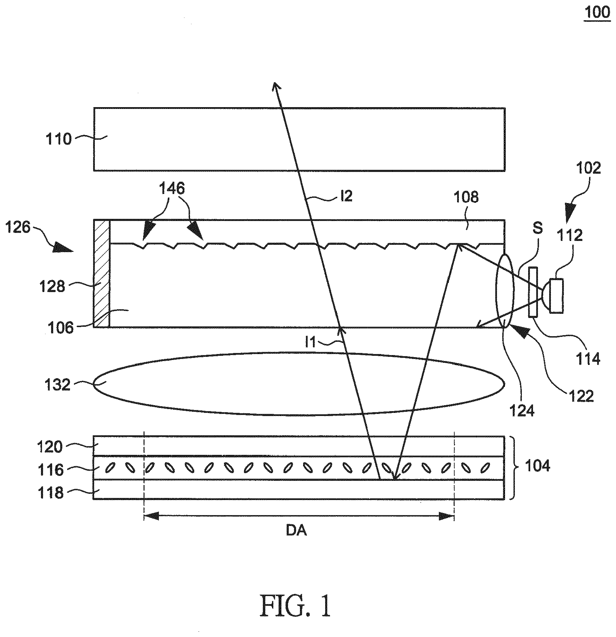

FIG. 1 is a schematic view illustrating an embodiment of a projection display apparatus 100. The projection display apparatus 100 includes a light source 102, a reflective-type light modulator 104, a light guide plate 106, a polarizer 108, and, optionally, an optical assembly 110 for transferring image rays. The projection display apparatus 100 may be implemented in head-mounted systems for near-eye display, or in video projectors for projecting real images on a large screen.

The light source 102 can emit an illuminating light S of a first polarization state, which can be s-polarized light. The light source 102 can exemplary include a light-emitting device 112 and a reflective polarizer 114. The light-emitting device 112 can be formed by one or more light-emitting diode (LED) capable of emitting light of one or multiple different colors. In one embodiment, the light-emitting device 112 can be configured to emit light of a same color, e.g., white color. In another embodiment, the light-emitting device 112 can be operable to emit a light of rapidly varying color, e.g., red, green and blue sequentially, which may be suitable for field sequential color display systems. The light emitted by the light-emitting device 112 can be randomly polarized light, which can be converted to the illumination light S of the s-polarization state via the reflective polarizer 114.

In one embodiment, the light modulator 104 can be a liquid crystal on silicon (LCOS) panel, which can include a liquid crystal 116 sandwiched between a silicon substrate 118 and a transparent substrate 120. The silicon substrate 118 can be formed with a driving circuit, and an array of pixel electrodes electrically connected with the driving circuit. According to received image data, the light modulator 104 can reflect an incident light and modulate its polarization state via the active pixel electrodes so as to form an image light I1 conveying a rendered image. In one embodiment, the light modulator 104 may be a microdisplay, which may be particularly suitable for head-mounted devices.

The light guide plate 106 is a planar guide that can make the illuminating light S propagate in a plane parallel to the light modulator 104, and redirects the illuminating light S for illuminating the light modulator 104 from a front side. The light guide plate 106 is placed between the light modulator 104 and the polarizer 108, and can be parallel to and substantially cover the surface area of the light modulator 104. More specifically, the light guide plate 106 can be arranged so that its peripheral boundary lies beyond the boundary of a front display area DA of the light modulator 104. The light source 102 is disposed facing a side edge 122 of the peripheral boundary of the light guide plate 106. With this arrangement, the light guide plate 106 can receive the illuminating light S at the side edge 122, make the illuminating light S propagate along the plane of the light guide plate 106 and guide it toward the light modulator 104, and transmit the image light I1 reflected from the light modulator 104 toward the polarizer 108.

In one embodiment, the light guide plate 106 can include a light collecting optic 124 arranged adjacent to the side edge 122 for facilitating entry of the illuminating light S into the light guide plate 106. The light collecting optic 124 can be a lens (e.g., a convex lens, a Fresnel lens, a prism sheet/BEF, etc.) attached with the light guide plate 106, or a curved surface (e.g., convex surface) formed with the light guide plate 106. In some variant embodiment, the respective positions of the light collecting optic 124 and the reflective polarizer 114 can be interchanged.

Another side edge 126 of the light guide plate 106 opposite to the side edge 122 can also be provided with a reflector 128. The reflector 128 can prevent light leakage at the side edge 126 of the light guide plate 106. In some variant embodiment, the reflector 128 may also be omitted and the side edge 126 can be black painted.

The polarizer 108 is disposed parallel at a side of the light guide plate 106 opposite to that of the light modulator 104. In one embodiment, the polarizer 108 may be arranged in contact with the light guide plate 106. In another embodiment, there may be an air gap between the polarizer 108 and the light guide plate 106. The polarizer 108 can be of a reflective type, i.e., it can transmit a part of the modulated image light I1 that has one polarization state (e.g., p-polarized part), and reflect a part of the image light that has the another polarization state (e.g., s-polarized part). Alternatively, the polarizer 108 can be of an absorption type, i.e., it can transmit a part of the modulated image light I1 that has one polarization state (e.g., p-polarized part), and absorb a part of the image light that has the another polarization state (e.g., s-polarized part). The portion of light exiting the polarizer 108 and traveling toward the optical assembly 110 can be designated as an image light 12.

The optical assembly 110 can collect rays of the image light 12, and form a projected image with uniform illumination for display to a user's eye. For example, the optical assembly 110 can include a projection lens, a field lens, a beam splitter, a prism, a reflective element, and the like. The component parts of the optical assembly 110 may vary according to the application of the projection display apparatus, e.g., whether it is implemented in a head-mounted system, or as a real projector for projecting an image on a screen.

The projection display apparatus 100 further includes a focusing lens 132 arranged between the light modulator 104 and the light guide plate 106. The focusing lens 132 is positioned to focus on the light modulator 104, such that an object plane is positioned on the light modulator 104.

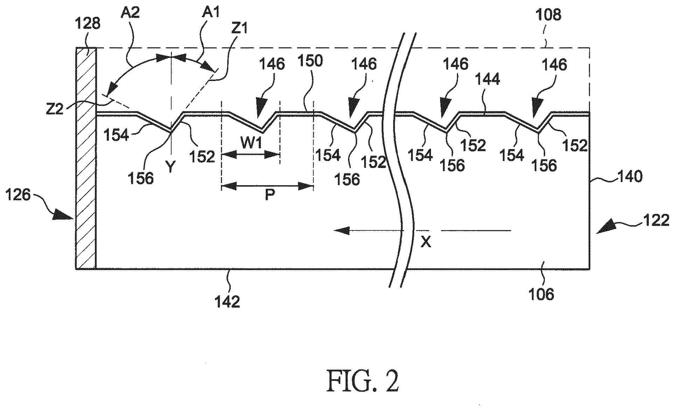

In conjunction with FIG. 1, FIG. 2 is a schematic view illustrating the structure of the light guide plate 106 in more details. The light guide plate 106 can be made of glass, or a transparent resin such as acrylic resin, polycarbonate resin, polymethyl methacrylate (PMMA), and the like, especially low birefringence material. The light guide plate 106 can have a refractive index that is between 1.47 and 2.5. The light guide plate 106 has a light incidence surface 140 at the side edge 122, and two opposite outer surfaces 142 and 144 extending along the plane of the light guide plate 106. The outer surfaces 142 and 144 can be substantially parallel to each other, and can respectively connect with a lower and an upper border of the light incidence surface 140. The outer surface 142 of the light guide plate 106 is oriented toward the light modulator 104, and can be substantially planar. The outer surface 144 of the light guide plate 106 is oriented toward the polarizer 108, and can be formed with a pattern of triangular grooves 146.

The grooves 146 can be distributed along a light propagation direction X extending parallel to the outer surface 144 from the light incidence surface 140 to the opposite side edge 126 of the light guide plate 106. Each of the grooves 146 has a V-like shape which is defined by two inclined sidewalls 152 and 154 that intersect with each other at a bottom end 156 of the groove 146. More specifically, a reference axis Y can be defined for each groove 146 as the axis that is orthogonal to the second outer surface 144 and passes by the bottom end 156 of the groove 146 where the two sidewalls 152 and 154 intersect with each other. The two sidewalls 152 and 154 are substantially planar and extend at two sides of the reference axis Y respectively along two directions Z1 and Z2, the sidewall 152 facing toward the light incidence surface 140, and the sidewall 154 facing toward another side of the light guide plate 106 (i.e., toward the side edge 126) opposite to that of the sidewall 152. With respect to each groove 146, the sidewall 152 thus can be closer to the light incidence surface 140 than the sidewall 154 along the light propagation direction X.

Each of the grooves 146 has an asymmetric shape, i.e., an angle A1 (not equal to 0) between the sidewall 152 and the reference axis Y differs from an angle A2 (not equal to 0) between the sidewall 154 and the reference axis Y. More specifically, the angle A1 between the sidewall 152 and the reference axis Y can range from about 30 to about 65 degrees, more preferably between 50 and 60 degrees. The angle A2 between the sidewall 154 and the reference axis Y is greater than the angle A1, and can range from about 65 to about 85 degrees, and more preferably between 70 and 80 degrees.

Moreover, a greatest width W1 of each groove 146 taken between the two sidewalls 152 and 154 along the light propagation direction X is at least equal to 0.1 micrometers, and a groove period P between two neighboring grooves 146 along the light propagation direction X is less than 100 micrometers. More preferably, the greatest width W1 of each groove 146 is between 1 and 20 micrometers, and the period P is between 1 and 20 micrometers, the period P not being smaller than the greatest width W1.

Referring again to FIG. 2, a multilayer film coating 150 comprised of dielectric or metal layers is applied on the sidewalls 152 and 154 of the grooves 146. Examples of layers composing the multilayer film coating 150 can include TiO2, Ta2O5, Ti3O5, Al2O3, SiO2, MgO, and the like. Moreover, the thickness of each layer in the multilayer film coating 150 can be between 5 nanometers and 5000 nanometers. The multilayer film coating 150 promotes polarization selection when optical reflection occurs on the sidewalls 152 and 154 for the illuminating light S traveling through the light guide plate 106, and transmission through the sidewalls 152 and 154 for the image light I from the light modulator 104.

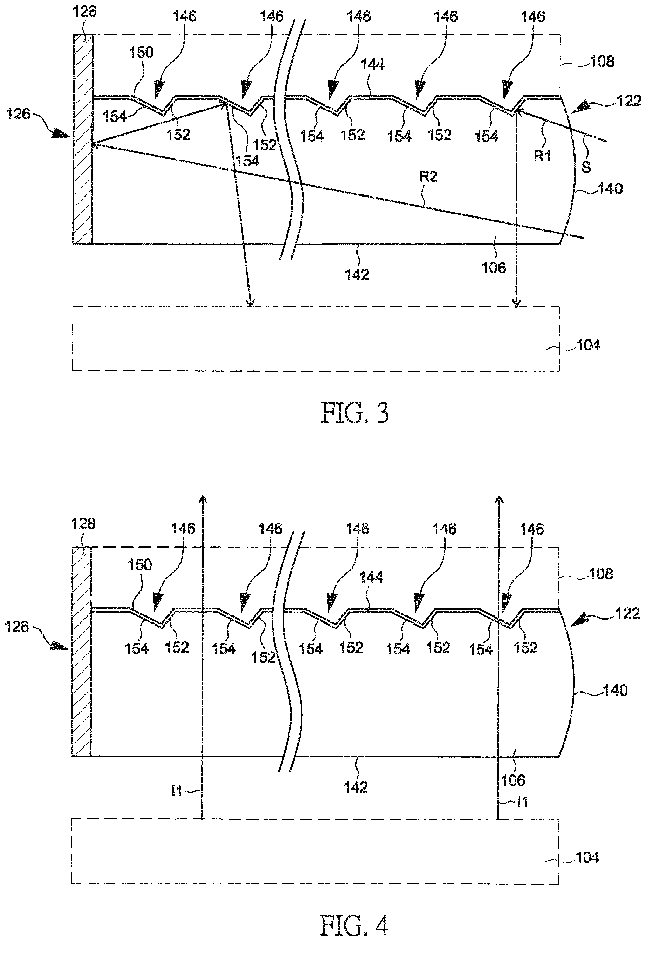

FIG. 3 is a schematic view illustrating the propagation paths of different portions R1 and R2 of the illuminating light S through the light guide plate 106, and FIG. 4 is a schematic view illustrating a propagation path of a portion of the image light I through the light guide plate 106. Referring to FIG. 4, a portion R1 of the illuminating light S entering the light guide plate 106 through the light incidence surface 140 and traveling at a certain angle is redirected toward the outer surface 142 by reflection on one or more of the sidewalls 152, and then exit the light guide plate 106 at the outer surface 142 for traveling toward the light modulator 104. Another portion R2 of the illuminating light S entering the light guide plate 106 through the light incidence surface 140 and traveling at another angle is redirected (e.g., the reflector 128 or the side edge 126) toward the sidewalls 154, directed toward the outer surface 142 by reflection on one or more of the sidewalls 154, and then exit the light guide plate 106 at the outer surface 142 for traveling toward the light modulator 104.

Referring to FIG. 4, the image light I1 from the light modulator 104 enters the light guide plate 106 through the outer surface 142, through the light guide plate 106, and exits the light guide plate 106 at the outer surface 144 and the sidewalls 152 and 154 of the grooves 146 for traveling toward the polarizer 108.

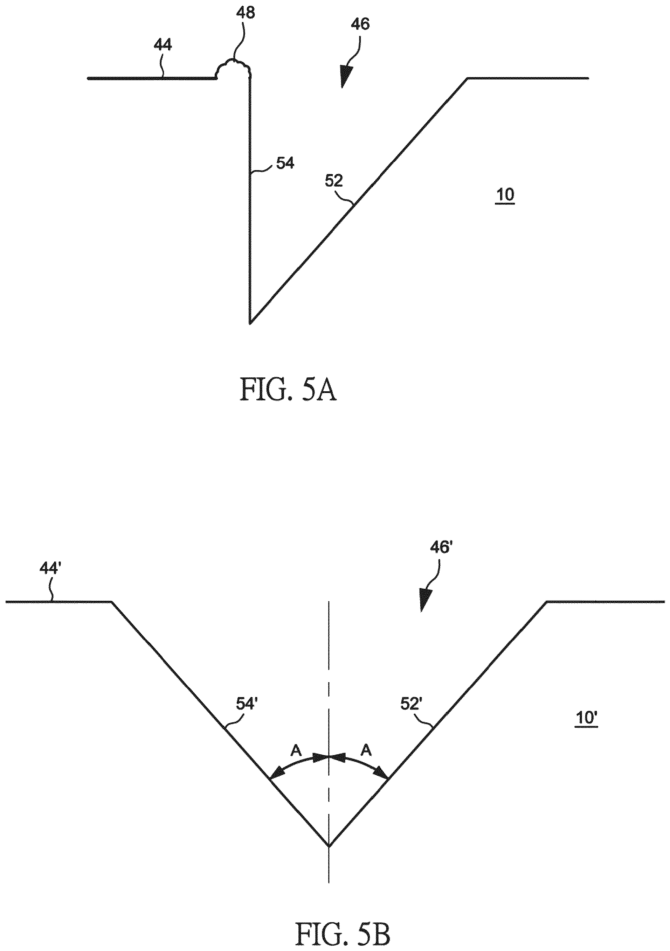

With the aforementioned asymmetric shape of the grooves 146, light leakage can be reduced, and the illuminating system comprised of the light source 102 and the light guide plate 106 can have improved light use efficiency and contrast ratio. In addition, the light guide plate 106 provided with the grooves 146 can also prevent the occurrence of ghost images. These advantages and benefits can be observed through experiments that are conducted with other samples of light guide plates having grooves of different shapes as shown in FIGS. 5A and 5B. FIG. 5A is a schematic view illustrating a comparative light guide plate 10 having a groove 46 that differs from the groove 146 previously described. The groove 46 is formed on an outer surface 44 of the light guide plate 10, and is by defined by two sidewalls 52 and 54. The sidewall 54 is perpendicular to the outer surface 44 of the light guide plate 10, and the sidewall 52 is tilted about 50 degrees relative to the sidewall 54. FIG. 5B is a schematic view illustrating another comparative light guide plate 10' having a symmetric groove 46' formed in an outer surface 44'. The groove 46' is defined by two symmetric sidewalls 52' and 54' that are respectively at a same angle A of about 50 degrees relative to a vertical axis of the groove 46'.

The results of optical test measures show that the light guide plate 106 provided with the grooves 146 can have a light leakage that is reduced by about a factor of 10 or even higher compared to the light leakage of the light guide plates 10 and 10' shown in FIGS. 5A and 5B. For example, it can be observed that the light guide plate 10 has a light leakage equal to about 3.99×10⁻⁶ lm, and the light guide plate 10' has a light leakage equal to about 1.45×10⁻⁵ lm. In contrast, the light guide plate 106 with asymmetric grooves 146 (the angles A1 and A2 being respectively equal to about 50 degrees and about 75 degrees) can have a substantially reduced light leakage equal to about 2.73×10⁻⁷ lm. Furthermore, it is can be observed that the light guide plate 10 has an average contrast ratio equal to about 165, and the light guide plate 10' has an average contrast ratio equal to about 75. In contrast, the light guide plate 106 with asymmetric grooves 146 can have a substantially higher average contrast ratio equal to about 298.

Moreover, microscopic observations show that the cutting of the groove 46 by a diamond blade may leave a residual protrusion 48 at an edge of the sidewall 54, which may be due to the perpendicularity of the sidewall 154 relative to the outer surface 44. The residual protrusion 48 may act as a lens that creates undesirable ghost images. In contrast, the asymmetric shape of the grooves 146 can avoid the formation of the residual protrusion 46, which can prevent the occurrence of ghost images. Accordingly, the light guide plate 106 provided with the grooves 146 as described herein can provide improved optical performance, i.e., having no ghost image, reduced light leakage and higher image contrast ratio.

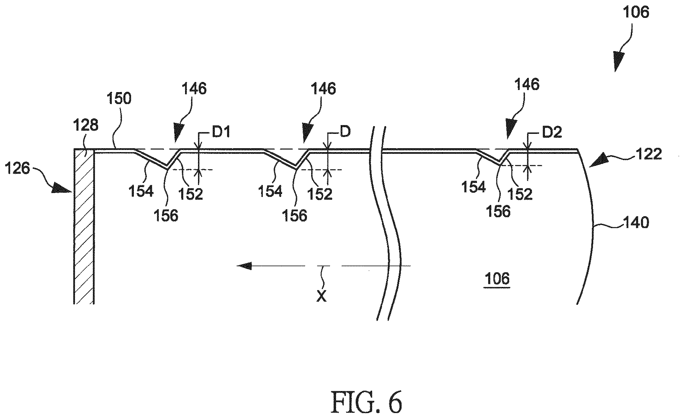

FIGS. 6-8 are schematic views illustrating different configurations of the grooves 146 on the outer surface 144. In FIG. 6, a first configuration of the light guide plate 106 is shown in which the grooves 146 are distributed with a varying groove depth D along the light propagation direction X. For each groove 146, the groove depth D can be defined as the depth of the groove 146 taken along the reference axis Y to the bottom end 156. The groove depth D may decrease along the light propagation direction X from the side edge 126 of the reflector 128 toward the light incidence surface 140. For example, a groove depth D1 of a first groove 146 that is farther from the light incidence surface 140 can be greater than the groove depth D2 of a second groove 146 that is relatively closer to the light incidence surface 140. The greater groove depth D1 results in the sidewalls 152 and 154 having a relatively larger size, which can facilitate light reflection at a region of the light guide plate 106 that is remote from the light incidence surface 140.

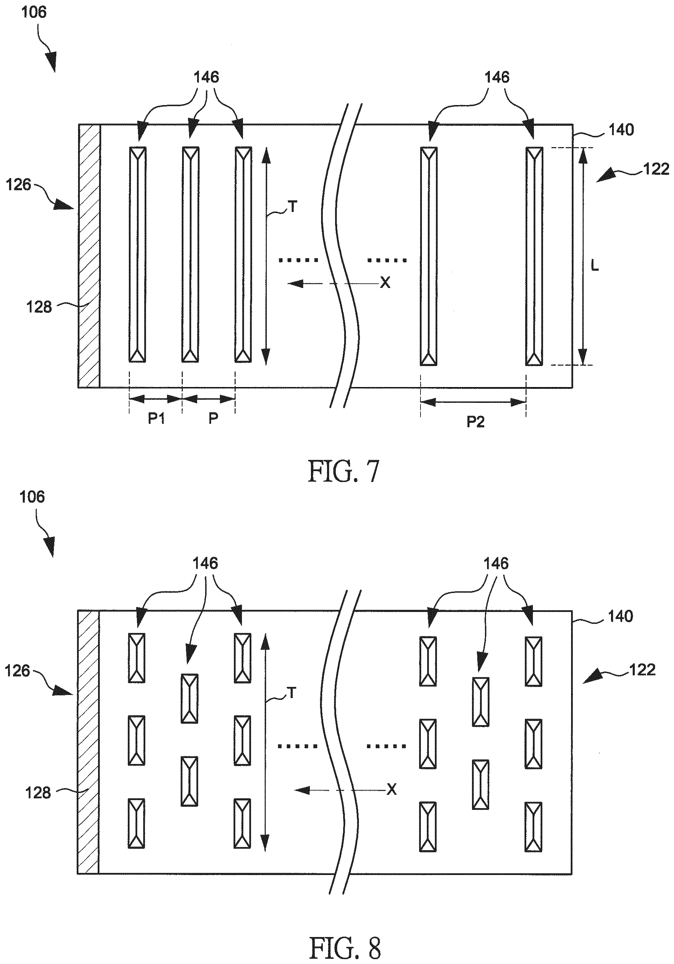

In FIG. 7, a second configuration of the light guide plate 106 is shown. The grooves 146 of the light guide plate 106 can be arranged in array so that the length L of each groove 146 is parallel to a transversal direction T which is perpendicular to the light propagation direction X. Moreover, the grooves 146 can be aligned with one another along the light propagation direction X. In this arrangement, the grooves 146 are distributed with a varying groove period P along the light propagation direction X. More specifically, the groove period P may increase along the light propagation direction X from the side edge 126 of the reflector 128 toward the light incidence surface 140. For example, a groove period PI of a first groove 146 that is farther from the light incidence surface 140 can be smaller than the groove period P2 of a second groove 146 that is relatively closer to the light incidence surface 140. The smaller groove period can result in a locally higher density of the grooves 146, which can facilitate light reflection and propagation at a region of the light guide plate 106 that is remote from the light incidence surface 140.

FIG. 8 illustrates another array layout in which the grooves 146 are arranged according to a staggered distribution on the outer surface 144 of the light guide plate 106. In this array arrangement, each row along the transversal direction T can include multiple grooves 146 aligned with one another, and neighboring grooves 146 along the light propagation direction X are misaligned from one another.

It is understood that the aforementioned configurations of the grooves 146 may also be combined together. For example, an arrangement can combine the configurations shown in FIGS. 6 and 7 so that the groove depth D decreases along the light propagation direction X from the reflector 128 toward the light incidence surface 140, and the groove period P increases along the light propagation direction X from the reflector 128 toward the light incidence surface 140. Another possible arrangement can distribute the grooves 146 as shown in FIG. 8 with the groove depth D decreasing along the light propagation direction X from the reflector 128 toward the light incidence surface 140, and/or the groove period P increasing along the light propagation direction X from the reflector 128 toward the light incidence surface 140.

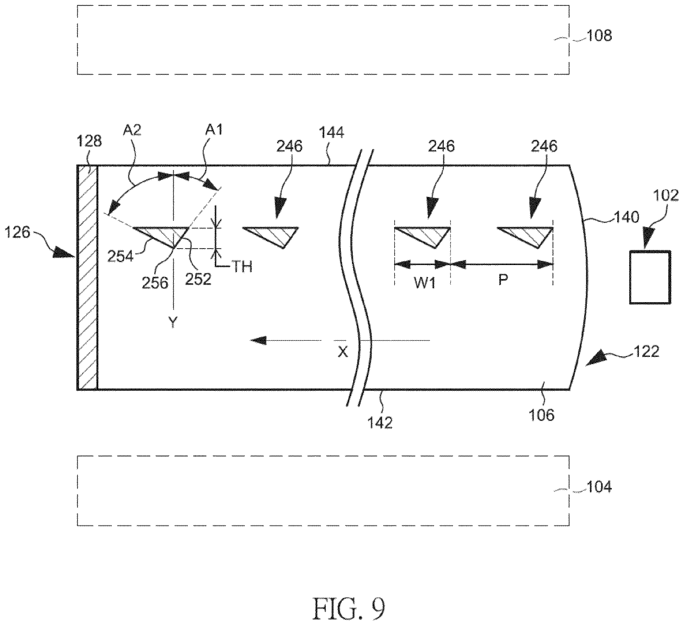

While the aforementioned embodiments use the grooves 146 formed on the outer surface 144 as optical elements for improving the optical performance of the light guide plate, the advantages and effects associated with the grooves 146 may be achieved with other arrangement of optical elements of similar shapes. FIG. 9 is a schematic view illustrating a comparative example not according to the invention in which a plurality optical elements 246 are provided in the light guide plate 106 as substitution for the grooves 146. The optical elements 246 can be solid elements that are embedded in the thickness of the light guide plate 106 between the two outer surfaces 142 and 144, and are distributed along the light propagation direction X.

Each of the optical elements 246 has an asymmetric shape similar to that of the groove 146 described previously, which can be a triangle including two inclined sidewalls 252 and 254 that intersect with each other at an apex 256 that points toward the outer surface 142. With respect to each optical element 246, the sidewall 252 can face toward the light incidence surface 140, and the sidewall 254 can face toward another side of the light guide plate 106 (i.e., toward the side edge 126) that is opposite to that of the sidewall 252. Each optical element 246 can have a reference axis Y perpendicular to the outer surface 144 that intersects the apex 256. The angle A1 between the sidewall 252 and the reference axis Y can range from 30 to 65 degrees, more preferably between 50 and 60 degrees. The angle A2 between the sidewall 254 and the reference axis Y is greater than the angle A1, and can range from 65 to 85 degrees, and more preferably between 70 and 80 degrees. Moreover, a greatest width W1 of each optical element 246 taken between the two sidewalls 252 and 254 along the light propagation direction X is at least equal to 0.1 micrometers, and a period P between two neighboring optical elements 246 along the light propagation direction X is less than 100 micrometers. More preferably, the greatest width W1 of each optical element 246 can range from 1 to 20 micrometers, and the period P can range from 1 to 20micrometers.

Like the grooves 146 previously described, the optical elements 246 can be distributed with a period P that increases toward the light incidence surface 140 of the light guide plate 106, and/or a thickness TH that decreases toward the light incidence surface 140. For each optical element 246, the thickness TH can be taken along the reference axis Y between the apex 256 and an opposite edge of the optical element 246. Moreover, any of the planar arrangements shown in FIGS. 7 and 8 may also be applicable for the optical elements 246.

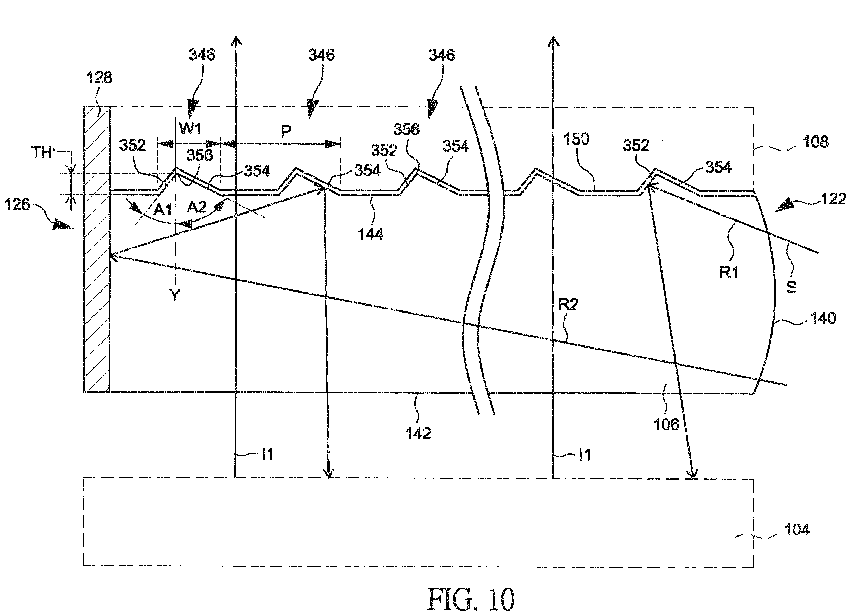

FIG. 10 is a schematic view illustrating another embodiment of a light guide plate 106 provided with a plurality optical elements 346 as substitution for the grooves 146 illustrated in FIG. 2. The optical elements 346 can be formed as triangular solid portions made of the material of the light guide plate 106 that protrude outward from the outer surface 144. With respect to each optical element 346, the reference axis Y can pass by its apex 356, the sidewall 352 can face toward the light incidence surface 140, and the sidewall 354 can face toward a side of the light guide plate 106 (i.e., toward the side edge 126) opposite to that of the sidewall 352. Like previously described, each of the optical elements 346 has an asymmetric shape, i.e., an angle A1 (not equal to 0) between the sidewall 352 and the reference axis Y differs from an angle A2 (not equal to 0) between the sidewall 354 and the reference axis Y. More specifically, the angle A1 between the sidewall 352 and the reference axis Y can range from about 30 to about 65 degrees, more preferably between 50 and 60 degrees. The angle A2 between the sidewall 354 and the reference axis Y is greater than the angle A1, and can range from about 65 to about 85 degrees, and more preferably between 70 and 80 degrees.

Moreover, a greatest width W1 of each optical element 346 taken between the two sidewalls 352 and 354 is at least equal to 0.1 micrometers, and a period P between two neighboring optical elements 346 is less than 100 micrometers. More preferably, the greatest width W1 of each optical element 346 can range from 1 to 20 micrometers, and the period P can range from 1 to 20 micrometers.

Like previously described, the optical elements 346 may also be distributed with a period P that increases toward the light incidence surface 140 of the light guide plate 106, and/or a thickness TH' that decreases toward the light incidence surface 140. For each optical element 346, the thickness TH' can be taken along the reference axis Y between the apex 356 and the plane of the outer surface 144. Moreover, any of the planar arrangements shown in FIGS. 7 and 8 may also be applicable for the optical elements 346. It is worth noting that a multilayer film coating 150 as described previously may also be arranged on each optical element 346.

A portion R1 of the illuminating light S entering the light guide plate 106 through the light incidence surface 140 and traveling at a certain angle can be redirected toward the outer surface 142 by reflection on one or more of the sidewalls 352, and then exit the light guide plate 106 at the outer surface 142 for traveling toward the light modulator 104. Another portion R2 of the illuminating light S entering the light guide plate 106 through the light incidence surface 140 and traveling at another angle can be reflected on the reflector 128 toward the sidewalls 354, be redirected toward the outer surface 142 by reflection on one or more of the sidewalls 354, and then exit the light guide plate 106 at the outer surface 142 for traveling toward the light modulator 104. Moreover, an image light I1 from the light modulator 104 can enter the light guide plate 106 through the outer surface 142, transmit through the light guide plate 106, and exit the light guide plate 106 at the outer surface 144 and the sidewalls 352 and 354 of the optical elements 346 for traveling toward the polarizer 108.

Advantages of the structures described herein include the ability to reduce a thickness of the projection display apparatus by using a light guide plate for illuminating a reflective light modulator in a front lit arrangement. Moreover, the light guide plate is constructed to include grooves or optical elements that can advantageously eliminate ghost effects, improve display brightness and contrast ratio.

## Claims

1. A projection display apparatus (100) comprising:
a light source (102) configured to emit a first light (S);
a reflective light modulator (104) configured to modulate the first light (S) to form a second light (I1) conveying a rendered image;
a polarizer (108);
a light guide plate (106) having a light incidence surface (140) through which the first light (S) enters the light guide plate (106), a first outer surface (142) through which a portion (R1) of the first light (S) exits the light guide plate (106) for traveling toward the light modulator (104), and a second outer surface (144) opposite to the first outer surface (142) through which a portion of the second light (II) exits the light guide plate for traveling toward the polarizer (108);
wherein the second outer surface (144) of the light guide plate (106) includes a plurality of optical elements (146, 346), each of the optical elements (146, 346) has a reference axis (Y) that is orthogonal to the second outer surface (144), and a first and a second sidewall (152, 352, 154, 354) that extend at two sides of the reference axis (Y), the first sidewall (152, 352) facing toward the light incidence surface (140), the second sidewall (154, 354) facing toward a side of the light guide plate (106) opposite to that of the first sidewall (152, 352), and a first angle (A1) defined between the first sidewall (152, 352) and the reference axis (Y) being smaller than a second angle (A2) defined between the second sidewall (154, 354) and the reference axis (Y), the projection display apparatus being **characterised in that** it comprises
a multilayer film coating (150) comprised of dielectric or metal layers arranged on the first and second sidewalls of the optical elements (152, 352, 154, 354), the multilayer film coating (150) promoting polarization selection when optical reflection occurs on the first and second sidewalls of the optical elements (152, 352, 154, 354) for the first
light (S) traveling through the light guide plate (106), and transmission through the first and second sidewalls of the optical elements (152, 352, 154, 354) for the second
light (II) from the light modulator (104); and **in that** it further comprises a focusing lens (132) arranged between the light modulator (104) and the light guide plate (106), the focusing lens (132) being positioned to focus on the light modulator (104).

2. The projection display apparatus (100) according to claim 1, wherein the optical elements (346) respectively protrude outward from the second outer surface (144) of the light guide plate (106).

3. The projection display apparatus (100) according to claim 1, wherein the optical elements are grooves (146) respectively formed in the second outer surface (144) of the light guide plate (106).

4. The projection display apparatus (100) according to claim 3, wherein the grooves (146) are distributed with a varying groove depth (D) along the light propagation direction (X), the groove depth (D) decreasing toward the light incidence surface (140).

5. The projection display apparatus (100) according to any of claims 1 to 4, wherein the first angle (A1) is between 30 and 65 degrees, and the second angle (A2) is between 65 and 85 degrees.

6. The projection display apparatus (100) according to any of claims 1 to 4, wherein the first angle (A1) is between 50 and 60 degrees, and the second angle (A2) is between 70 and 80 degrees.

7. The projection display apparatus (100) according to any of claims 1 to 6, wherein a greatest width (W1) of each optical element (146, 346) taken between the first and second sidewalls (152, 352, 154, 354) is at least equal to 0.1 micrometers, and a period (P) between two neighboring optical elements (146, 346) is less than 100 micrometers.

8. The projection display apparatus (100) according to any of claims 1 to 6, wherein a greatest width (W1) of each optical element (146, 346) taken between the first and second sidewalls (152, 352, 154, 354) is between 1 and 20 micrometers, and a period (P) between two neighboring optical elements (146, 346) is between 1 and 20 micrometers.

9. The projection display apparatus (100) according to any of claims 1 to 8, wherein the optical elements (146, 346) are distributed with a varying period (P) along the light propagation direction (X), the period (P) increasing toward the light incidence surface (140).

10. The projection display apparatus (100) according to claim 1 or 2, wherein the optical elements (346) are distributed with a varying thickness (TH') along the light propagation direction (X), the thickness (TH') decreasing toward the light incidence surface (140).

11. The projection display apparatus (100) according to any of claims 1 to 10, wherein the light modulator (104) includes a liquid crystal on silicon panel.

12. The projection display apparatus (100) according to claim 1, 2 or 10, wherein the first and second sidewalls (352, 354) of each optical element (346) are substantially planar, and intersect with each other at an apex (356) of the optical element (346).

## Patentansprüche

1. Projektionsanzeigevorrichtung (100), umfassend:
eine Lichtquelle (102), die dazu eingerichtet ist, ein erstes Licht (S) zu emittieren;
einen reflektiven Lichtmodulator (104), der dazu eingerichtet ist, das erste Licht (S) zu modulieren, um ein zweites Licht (I1) auszubilden, das ein gerendertes Bild übermittelt;
einen Polarisator (108);
eine Lichtleitplatte (106), die eine Lichteinfallsfläche (140), durch die das erste Licht (S) in die Lichtleitplatte (106) eintritt, eine erste Außenfläche (142), durch die ein Teil (R1) des ersten Lichts (S) aus der Lichtleitplatte (106) austritt, um zum Lichtmodulator (104) zu laufen, und eine der ersten Außenfläche (142) gegenüberliegende zweite Außenfläche (144) aufweist, durch die ein Teil des zweiten Lichts (I1) aus der Lichtleitplatte austritt, um zum Polarisator (108) zu laufen;
wobei die zweite Außenfläche (144) der Lichtleitplatte (106) eine Vielzahl von optischen Elementen (146, 346) umfasst, wobei jedes der optischen Elemente (146, 346) eine Bezugsachse (Y), die orthogonal zu der zweiten Außenfläche (144) ist, und eine erste und eine zweite Seitenwand (152, 352, 154, 354) aufweist, die sich auf zwei Seiten der Bezugsachse (Y) erstrecken, wobei die erste Seitenwand (152, 352) der Lichteinfallsfläche (140) zugewandt ist, die zweite Seitenwand (154, 354) einer Seite der Lichtleitplatte (106) zugewandt ist, die der der ersten Seitenwand (152, 352) gegenüberliegt, und ein erster Winkel (A1), der zwischen der ersten Seitenwand (152, 352) und der Bezugsachse (Y) definiert ist, kleiner als ein zweiter Winkel (A2) ist, der zwischen der zweiten Seitenwand (154, 354) und der Bezugsachse (Y) definiert ist,
wobei die Projektionsanzeigevorrichtung **dadurch gekennzeichnet ist, dass** sie eine Mehrschichtfolienbeschichtung (150) umfasst, die aus dielelektrischen oder metallischen Schichten besteht, die auf den ersten und zweiten Seitenwänden der optischen Elemente (152, 352, 154, 354) angeordnet sind, wobei die Mehrschichtfolienbeschichtung (150) eine Polarisationsselektion bei Auftreten einer optischen Reflexion auf den ersten und zweiten Seitenwänden der optischen Elemente (152, 352, 154, 354) für das durch die Lichtleitplatte (106) laufende erste Licht (S) und eine Fortleitung durch die ersten und zweiten Seitenwände der optischen Elemente (152, 352, 154, 354) für das zweite Licht (I1) vom Lichtmodulator (104) begünstigt; und dadurch, dass sie ferner eine Fokussierlinse (132) umfasst, die zwischen dem Lichtmodulator (104) und der Lichtleitplatte (106) angeordnet ist, wobei die Fokussierlinse (132) zum Fokussieren auf den Lichtmodulator (104) positioniert ist.

2. Projektionsanzeigevorrichtung (100) nach Anspruch 1, wobei die optischen Elemente (346) jeweils von der zweiten Außenfläche (144) der Lichtleitplatte (106) nach außen hervorstehen.

3. Projektionsanzeigevorrichtung (100) nach Anspruch 1, wobei die optischen Elemente Rillen (146) sind, die jeweils in der zweiten Außenfläche (144) der Lichtleitplatte (106) ausgebildet sind.

4. Projektionsanzeigevorrichtung (100) nach Anspruch 3, wobei die Rillen (146) mit einer variierenden Rillentiefe (D) entlang der Lichtausbreitungsrichtung (X) verteilt sind, wobei die Rillentiefe (D) zur Lichteinfallsfläche (140) hin abnimmt.

5. Projektionsanzeigevorrichtung (100) nach einem der Ansprüche 1 bis 4, wobei der erste Winkel (A1) zwischen 30 und 65 Grad beträgt und der zweite Winkel (A2) zwischen 65 und 85 Grad beträgt.

6. Projektionsanzeigevorrichtung (100) nach einem der Ansprüche 1 bis 4, wobei der erste Winkel (A1) zwischen 50 und 60 Grad beträgt und der zweite Winkel (A2) zwischen 70 und 80 Grad beträgt.

7. Projektionsanzeigevorrichtung (100) nach einem der Ansprüche 1 bis 6, wobei eine größte Breite (W1) von jedem optischen Element (146, 346), gemessen zwischen der ersten und der zweiten Seitenwand (152, 352, 154, 354), mindestens 0,1 Mikrometer beträgt und eine Periode (P) zwischen zwei benachbarten optischen Elementen (146, 346) weniger als 100 Mikrometer beträgt.

8. Projektionsanzeigevorrichtung (100) nach einem der Ansprüche 1 bis 6, wobei eine größte Breite (W1) von jedem optischen Element (146, 346), gemessen zwischen der ersten und der zweiten Seitenwand (152, 352, 154, 354), zwischen 1 und 20 Mikrometer beträgt und eine Periode (P) zwischen zwei benachbarten optischen Elementen (146, 346) zwischen 1 und 20 Mikrometer beträgt.

9. Projektionsanzeigevorrichtung (100) nach einem der Ansprüche 1 bis 8, wobei die optischen Elemente (146, 346) mit einer variierenden Periode (P) entlang der Lichtausbreitungsrichtung (X) verteilt sind, wobei die Periode (P) zur Lichteinfallsfläche (140) hin zunimmt.

10. Projektionsanzeigevorrichtung (100) nach Anspruch 1 oder 2, wobei die optischen Elemente (346) mit einer variierenden Dicke (TH') entlang der Lichtausbreitungsrichtung (X) verteilt sind, wobei die Dicke (TH') zur Lichteinfallsfläche (140) hin abnimmt.

11. Projektionsanzeigevorrichtung (100) nach einem der Ansprüche 1 bis 10, wobei der Lichtmodulator (104) einen Flüssigkristall auf einer Siliziumplatte umfasst.

12. Projektionsanzeigevorrichtung (100) nach Anspruch 1, 2 oder 10, wobei die erste und die zweite Seitenwand (352, 354) von jedem optischen Element (346) im Wesentlichen planar sind und einander an einem Scheitelpunkt (356) des optischen Elements (346) schneiden.

## Revendications

1. Appareil d'affichage par projection (100) comprenant :
une source de lumière (102) conçue pour émettre une première lumière (S) ;
un modulateur de lumière réfléchie (104) conçu pour moduler la première lumière (S) pour former une deuxième lumière (I1) transportant une image rendue ;
un polariseur (108) ;
une plaque de guidage de lumière (106) présentant une surface d'incidence de lumière (140) à travers laquelle la première lumière (S) entre dans la plaque de guidage de lumière (106), une première surface externe (142) à travers laquelle une partie (R1) de la première lumière (S) sort de la plaque de guidage de lumière (106) pour se déplacer vers le modulateur de lumière (104) et une deuxième surface externe (144) opposée à la première surface externe (142) à travers laquelle une partie de la deuxième lumière (I1) sort de la plaque de guidage de lumière pour se déplacer vers le polariseur (108) ;
la deuxième surface externe (144) de la plaque de guidage de lumière (106) comprenant une pluralité d'éléments optiques (146, 346), chacun des éléments optiques (146, 346) présentant un axe de référence (Y) qui est orthogonal à la deuxième surface externe (144) et une première et une deuxième paroi latérale (152, 352, 154, 354) qui s'étendent sur deux côtés de l'axe de référence (Y), la première paroi latérale (152, 352) faisant face à la surface d'incidence de lumière (140), la deuxième paroi latérale (154, 354) faisant face à un côté de la plaque de guidage de lumière (106) opposé à celui de la première paroi latérale (152, 352) et un premier angle (A1) défini entre la première paroi latérale (152, 352) et l'axe de référence (Y) étant inférieur à un deuxième angle (A2) défini entre la deuxième paroi latérale (154, 354) et l'axe de référence (Y),
l'appareil d'affichage par projection étant **caractérisé en ce qu'**il comprend un revêtement de film multicouche (150) constitué de couches diélectriques ou métalliques agencées sur la première et la deuxième paroi latérale des éléments optiques (152, 352, 154, 354), le revêtement de film multicouche (150) favorisant la sélection de polarisation lorsque la réflexion optique se produit sur la première et la deuxième paroi latérale des éléments optiques (152, 352, 154, 354) pour la première lumière (S) se déplaçant à travers la plaque de guidage de lumière (106) et la transmission à travers la première et la deuxième paroi latérale des éléments optiques (152, 352, 154, 354) pour la deuxième lumière (I1) provenant du modulateur de lumière (104) ; et **en ce qu'**il comprend en outre une lentille de focalisation (132) agencée entre le modulateur de lumière (104) et la plaque de guidage de lumière (106), la lentille de focalisation (132) étant positionnée pour se focaliser sur le modulateur de lumière (104).

2. Appareil d'affichage par projection (100) selon la revendication 1, les éléments optiques (346) faisant respectivement saillie vers l'extérieur à partir de la deuxième surface externe (144) de la plaque de guidage de lumière (106).

3. Appareil d'affichage par projection (100) selon la revendication 1, les éléments optiques étant des rainures (146) formées respectivement dans la deuxième surface externe (144) de la plaque de guidage de lumière (106).

4. Appareil d'affichage par projection (100) selon la revendication 3, les rainures (146) étant réparties avec une profondeur de rainure (D) variable dans le sens de propagation de la lumière (X), la profondeur de rainure (D) diminuant vers la surface d'incidence de lumière (140).

5. Appareil d'affichage par projection (100) selon l'une quelconque des revendications 1 à 4,
le premier angle (A1) étant situé entre 30 et 65 degrés et le deuxième angle (A2) étant situé entre 65 et 85 degrés.

6. Appareil d'affichage par projection (100) selon l'une quelconque des revendications 1 à 4,
le premier angle (A1) étant situé entre 50 et 60 degrés et le deuxième angle (A2) étant situé entre 70 et 80 degrés.

7. Appareil d'affichage par projection (100) selon l'une quelconque des revendications 1 à 6,
une plus grande largeur (W1) de chaque élément optique (146, 346) prise entre la première et la deuxième paroi latérale (152, 352, 154, 354) étant au moins égale à 0,1 micromètre et une période (P) entre deux éléments optiques (146, 346) voisins étant inférieure à 100 micromètres.

8. Appareil d'affichage par projection (100) selon l'une quelconque des revendications 1 à 6,
une plus grande largeur (W1) de chaque élément optique (146, 346) prise entre la première et la deuxième paroi latérale (152, 352, 154, 354) étant située entre 1 et 20 micromètres et une période (P) entre deux éléments optiques (146, 346) voisins étant située entre 1 et 20 micromètres.

9. Appareil d'affichage par projection (100) selon l'une quelconque des revendications 1 à 8,
les éléments optiques (146, 346) étant répartis avec une période (P) variable dans le sens de propagation de la lumière (X), la période (P) augmentant vers la surface d'incidence de lumière (140).

10. Appareil d'affichage par projection (100) selon la revendication 1 ou 2, les éléments optiques (346) étant répartis avec une épaisseur (TH') variable dans le sens de propagation de la lumière (X), l'épaisseur (TH') diminuant vers la surface d'incidence de lumière (140).

11. Appareil d'affichage par projection (100) selon l'une quelconque des revendications 1 à 10,
le modulateur de lumière (104) comprenant un cristal liquide sur un panneau de silicium.

12. Appareil d'affichage par projection (100) selon la revendication 1, 2 ou 10,
la première et la deuxième paroi latérale (352, 354) de chaque élément optique (346) étant sensiblement planes et se croisant au niveau d'un sommet (356) de l'élément optique (346) .
